(19) Europäisches Patentamt / European Patent Office / Office européen des brevets

(11) **EP 2 341 637 A1**

(12) **EUROPEAN PATENT APPLICATION**
published in accordance with Art. 153(4) EPC

(43) Date of publication:
**06.07.2011 Bulletin 2011/27**

(21) Application number: **09817190.3**

(22) Date of filing: **25.11.2009**

(51) Int Cl.:
**H04B 7/005** (2006.01)

(86) International application number:
**PCT/CN2009/001319**

(87) International publication number:
**WO 2010/037276 (08.04.2010 Gazette 2010/14)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **25.09.2008 CN 200810223005**

(71) Applicant: **China Mobile Communications Corporation**
**Beijing 100032 (CN)**

(72) Inventors:
  • **LIU, Guangyi**
   **Beijing 100032 (CN)**

  • **HAN, Lu**
   **Beijing 100032 (CN)**
  • **SHEN, Xiaodong**
   **Beijing 100032 (CN)**
  • **JIANG, Dajie**
   **Beijing 100032 (CN)**
  • **WANG, Qixing**
   **Beijing 100032 (CN)**
  • **ZHANG, Yong**
   **Beijing 100032 (CN)**

(74) Representative: **Kling, Simone**
   **Lavoix Munich**
   **Bayerstrasse 85a**
   **80335 München (DE)**

(54) **METHOD AND USER TERMINAL FOR DETERMINING ASSOCIATED PARAMETERS, AND METHOD AND BASE STATION FOR FORMING SIGNAL**

(57) A method for determining associated parameters of beam space is disclosed, which includes: the user terminal receives the common pilot signals which are respectively sent by at least two antennas; when the number of the antennas which need to send the common pilot signals is not more than the number of the antenna ports, the common pilot signals are respectively sent by the antennas through the antenna ports; or, when the number of the antennas which need to send the common pilot signals is more than the number of the antenna ports, the antennas are grouped, and the common pilot signals are sent by antennas of each groups through the antenna ports based on time division multiplex mode, wherein the number of the antennas in each group is not more than the number of antenna ports; and the user terminal determines the associated parameters of each beam space of the user terminal itself according to the received signals respectively sent by at least two antennas. A user terminal for determining associated parameters of beam space, and a method and base station for forming signal are also disclosed. By applying the solutions of this invention, the problem that the associated parameters of each beam space can not be determined accurately in the prior art can be solved.

A user equipment receives common pilot signals transmitted respectively from at least two antennas in a base station — 11

The user equipment determines a relevant parameter in a beam space of the user equipment from the received common pilot signals transmitted respectively from the at least two antennas — 12

Fig.1

**Description**

**Field of the Invention**

The present invention relates to the fields of computers and communications, and particularly to a method and user equipment for determining a relevant parameter and method and base station for forming a signal in a beam space.

**Background of the Invention**

At present, the characteristic of symmetry between uplink and downlink channels may be utilized in a Time Division Duplexing (TDD) communication system to perform a eigen based beamforming process on downlink channel information according to uplink channel information.

For beamforming in a Time Division Duplexing (TDD) Long Term Evolution (LTE) system, a relevant parameter, in a beam space, for eigen based beamforming may be determined and fed back in the following two methods.

In a first method, a common pilot signal is transmitted from one antenna in a base station via a corresponding antenna port, a User Equipment (UE) determines a relevant parameter in a beam space from the common pilot signal upon reception thereof and feeds back the determined relevant parameter to the base station, and the base station performs eigen based beamforming according to the relevant parameter fed back from the UE and then transmits the eigen beam. A drawback of this method lies in that since the UE determines the relevant parameter for eigen based beamforming only from the common pilot signal over a single antenna, the UE may determine the relevant parameter inaccurately because of being susceptible to a fading characteristic of the space, and consequently an error might occur in the eigen based beamforming at the base station according to the relevant parameter fed back from the UE.

In a second method, common pilot signals transmitted respectively from all of antennas in a base station are processed with weight vectors of antennas for broadcast beamforming, so as to acquire a single beamformed common pilot signal, the beamformed common pilot signal is transmitted to a UE over an antenna port, the UE determines a relevant parameter in a beam space from the beamformed common pilot signal upon reception thereof and feeds back the determined relevant parameter to the base station, and the base station performs eigen based beamforming according to the relevant parameter fed back from the UE and then transmit the eigen beam. A drawback of this method lies in that since the beamformed common pilot signal received by the UE is somewhat different from the common pilot signals transmitted respectively from the antennas, the relevant parameter in the beam space might be determined by the UE inaccurately, and consequently an error might occur in eigen based beamforming at the base station according to the relevant parameter fed back from the UE.

**Summary of the Invention**

Embodiments of the invention provide a method and user equipment for determining a relevant parameter and method and base station for forming a signal in a beam space, so as to address the problem in the prior art that the relevant parameter in a beam space is determined inaccurately.

In view of this, embodiments of the invention adopt the following technical solutions.

A method for determining a relevant parameter in a beam space includes: receiving by a user equipment common pilot signals which are transmitted concurrently from antennas intending to transmit the common pilot signals via respective antenna ports when the number of the antennas is no more than the number of the antenna ports but no less than two or which are transmitted from groups of antennas intending to transmit the common pilot signals via antenna ports in a time division duplexing manner after grouping the antennas when the number of the antennas is more than the number of the antenna ports, where the number of antennas in each group is no more than the number of the antenna ports; and determining by the user equipment the relevant parameter in the beam space of the user equipment from received common pilot signals transmitted from at least two antennas.

A user equipment for determining a relevant parameter in a beam space includes: a reception unit configured to receive common pilot signals which are transmitted concurrently from at least two antennas intending to transmit the common pilot signal via respective antenna ports when the number of the at least two antennas is no more than the number of the antenna ports or which are transmitted from groups of antennas intending to transmit the common pilot signal via antenna ports in a time division duplexing manner after grouping at least two antennas when the number of the at least two antennas is more than the number of the antenna ports, where the number of antennas in each group is no more than the number of the antenna ports; and a determination unit configured to determine the relevant parameter in the beam space of the user equipment from the common pilot signals transmitted from the at least two antennas and received by the reception unit.

A method for forming a signal in a beam space includes: receiving by a base station a relevant parameter in a beam space of a user equipment fed back from the user equipment, where the parameter is determined by the user equipment from common pilot signals transmitted respectively from at least two antennas; and forming a signal to be transmitted in the beam space of the user equipment according to the parameter.

A base station for forming a signal in a beam space includes: a reception unit configured to receive a relevant parameter in a beam space of a user equipment fed back from the user equipment, where the parameter is determined by the user equipment from common pilot signals transmitted respectively from at least two antennas; and a forming unit configured to form a signal to be transmitted in the beam space of the user equipment according to the parameter received by the reception unit.

A method for feeding back a relevant parameter in a beam space includes: determining, by a user equipment, signal to noise ratios over respective antennas of the user equipment from received common pilot signals; determining an average signal to noise ratio over the respective antennas of the user equipment from the determined signal to noise ratios over the respective antennas of the user equipment; and feeding the determined average signal to noise ratio over the respective antennas back to a base station.

A method for feeding back a relevant parameter in a beam space includes: determining by a user equipment a downlink channel response matrix and an average signal to noise ratio over respective antennas of the user equipment from received common pilot signals; performing sigular value decomposition on the downlink channel response matrix to derive eigenvalues in respective beam spaces; calculating active signal to noise ratios in respective beam spaces of the user equipment as the product of the average signal to noise ratio and the square of the eigenvalues in respective beam spaces; and searching, with the active signal to noise ratios, a mapping relationship table between active signal to noise ratios and modulation and coding schemes for modulation and coding schemes available in respective beam spaces; determining by the user equipment the number of supportable beam spaces from the eigenvalues in the respective beam spaces or from the active signal to noise ratios; and feeding the modulation and coding schemes and the number of beam spaces back to a base station.

A user equipment for feeding back a relevant parameter in a beam space includes: a first determination unit configured to determine a downlink channel response matrix and an average signal to noise ratio over respective antennas of the user equipment from received common pilot signals; a decomposition unit configured to perform sigular value decomposition on the downlink channel response matrix to derive eigenvalues in respective beam spaces; an active signal to noise ratio determination unit configured to determine active signal to noise ratios in respective beam spaces of the user equipment as the product of the average signal to noise ratio determined by the first determination unit and the square of the eigenvalues in respective beam space derived by the decomposition unit; a search unit configured to search, with the active signal to noise ratios determined by the active signal to noise ratio determination unit, a mapping relationship table between active signal to noise ratios and modulation and coding schemes for modulation and coding schemes available in respective beam spaces; a second determination unit configured to determine the number of beam spaces supportable by the user equipment from the eigenvalues in the respective beam spaces derived by the decomposition unit or from the active signal to noise ratios over the respective antennas of the user equipment determined by the active signal to noise ratio determination unit; and a feedback unit configured to feed the modulation and coding schemes retrieved by the search unit and the number of beam spaces determined by the second determination unit back to the base station.

A method for forming a signal in a beam space includes: receiving by a base station an average signal to noise ratio over respective antennas of a user equipment fed back from the user equipment; determining an uplink channel response matrix of the user equipment from an echo signal over an uplink channel; transposing the determined uplink channel response matrix to derive a downlink channel response matrix; performing sigular value decomposition on the downlink channel response matrix to derive eigenvalues and beam space vectors in respective beam spaces of the user equipment; determining active signal to noise ratios in respective beam spaces of the user equipment from the average signal to noise ratio and the eigenvalues; searching, with the active signal to noise ratios, a mapping relationship table between active signal to noise ratios and modulation and coding schemes for modulation and coding schemes available in respective beam space; and forming signals to be transmitted in respective beam spaces, the number of which corresponds to the number of beam spaces supportable by the user equipment, according to the modulation and coding schemes available and the beam space vectors in respective beam spaces.

A base station for forming a signal in a beam space includes: a reception unit configured to receive an average signal to noise ratio over respective antennas of a user equipment fed back from the user equipment; a determination unit configured to determine an uplink channel response matrix of the user equipment from an echo signal over an uplink channel; a transposition unit configured to transpose the uplink channel response matrix determined by the determination unit to derive a downlink channel response matrix; a decomposition unit configured to perform sigular value decomposition on the downlink channel response matrix generated by the transposition unit to derive eigenvalues and beam space vectors in the respective beam spaces of the user equipment; a number determination unit configured to determine the number of beam spaces supportable by the user equipment from the eigenvalues in the respective beam spaces derived by the decomposition unit; an active signal to noise ratio determination unit configured to determine active signal to noise ratios in respective beam spaces of the user equipment from the eigenvalues and the average signal to noise ratio; a search unit configured to search, with the active signal to noise ratios determined by the active signal to noise ratio determination unit, a mapping relationship table between active signal to noise ratios and modulation and coding schemes for modulation and coding schemes available in respective beam spaces; and a forming unit configured to form signals to be transmitted in respective beam spaces, the number of which corresponds to the number of beam spaces determined by the number determination unit, according to the modulation and coding schemes available in respective beam spaces retrieved by the search unit and the beam space vectors derived by the decomposition unit.

A method for forming a signal in a beam space includes: receiving by a base station modulation and coding schemes available in respective beam spaces of a user equipment and the number of beam spaces supportable by the user equipment fed back from the user equipment; determining an uplink channel response matrix of the user equipment from an echo signal over an uplink channel; transposing the determined uplink channel response matrix to derive a downlink channel response matrix; performing sigular value decomposition on the downlink channel response matrix to derive beam space vectors in the respective beam spaces of the user equipment; and forming signals to be transmitted in respective beam spaces, the number of which corresponds to the number of beam spaces supportable by the user equipment, according to the modulation and coding schemes available and the beam space vectors in respective beam spaces.

A base station for forming a signal in a beam space includes: a reception unit configured to receive modulation and coding schemes available in respective beam spaces of a user equipment and the number of beam spaces supportable by the user equipment fed back from the user equipment; a determination module configured to determine an uplink channel response matrix of the user equipment from an echo signal over an uplink channel; a transposition module configured to transpose the uplink channel response matrix determined by the determination module to derive a downlink channel response matrix; a decomposition module configured to perform sigular value decomposition on the downlink channel response matrix generated by the transposition module to derive beam space vectors in the respective beam spaces of the user equipment; and a forming module configured to form signals to be transmitted in respective beam spaces, the number of which corresponds to the number of beam spaces supportable by the user equipment received by the reception unit, according to the modulation and coding schemes available in respective beam spaces received by the reception unit and the beam space vectors in respective beam spaces derived by the decomposition module.

In the embodiments of the invention, a user equipment receives common pilot signals transmitted respectively from at least two antennas in a base station, where the common pilot signals are transmitted from antennas intending to transmit the common pilot signal via antenna ports respectively when the number of the antennas is no more than the number of the antenna ports, or the common pilot signals are transmitted from groups of antennas intending to transmit the common pilot signal via antenna ports in a time division duplexing manner after grouping the antennas when the number of the antennas is more than the number of the antenna ports, where the number of antennas in each group is no more than the number of the antenna ports; and the user equipment determines a relevant parameter in a beam space of the user equipment from the received common pilot signals transmitted respectively from the at least two antennas, so that the user equipment can receive the common pilot signals transmitted concurrently from the at least two antennas or respectively from the groups of antennas and determine relevant parameters in respective beam spaces from the received common pilot signals, therefore addressing the problem in the prior art of determining relevant parameters in the respective beam spaces inaccurately

**Brief Description of the Drawings**

Fig. 1 is a schematic diagram of a specific flow of a method for determining a relevant parameter in a beam space according to an embodiment of the invention;

Fig. 2 is a block diagram of a specific structure of a user equipment for determining a relevant parameter in a beam space according to an embodiment of the invention;

Fig. 3 is a schematic diagram of a specific flow of a method for forming a signal in a beam space according to an embodiment of the invention;

Fig. 4 is a schematic diagram of a specific flow of another method for forming a signal in a beam space according to an embodiment of the invention;

Fig. 5 is a schematic diagram of a specific flow of still another method for forming a signal in a beam space according to an embodiment of the invention;

Fig. 6 is a schematic diagram of a specific flow of a further method for forming a signal in a beam space according to an embodiment of the invention;

Fig. 7 is a block diagram of a specific structure of a base station for forming a signal in a beam space according to an embodiment of the invention;

Fig. 8 is a block diagram of a specific structure of another base station for forming a signal in a beam space according to an embodiment of the invention;

Fig. 9 is a block diagram of a specific structure of still another base station for forming a signal in a beam space according to an embodiment of the invention; and

Fig. 10 is a block diagram of a specific structure of a further base station for forming a signal in a beam space according to an embodiment of the invention.

**Detailed Description of the Embodiments**

Embodiments of the invention provide a method and device for determining a forming parameter and a method and device for forming a signal to address the problem in the prior art of determining quality information of a channel inaccurately.

A general implementation principle and specific implementations of the technical solutions according to the embodiments of the invention and advantageous effects that they can attain correspondingly will be set forth in details hereinafter with reference to the drawings.

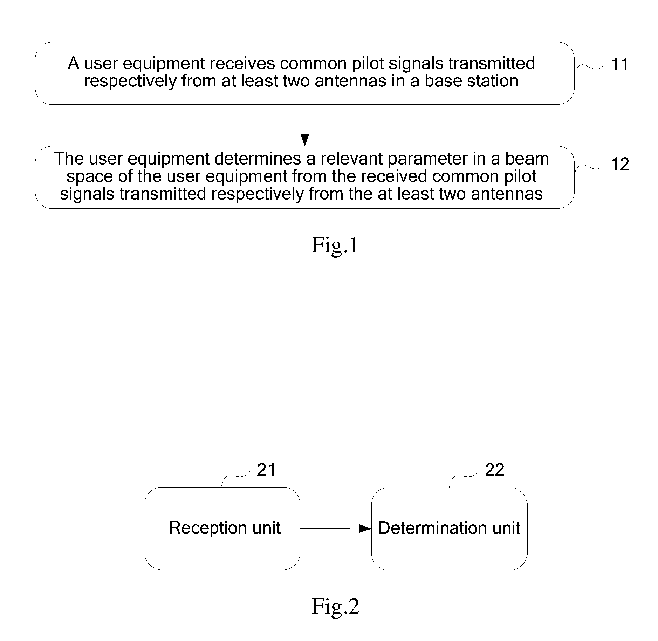

Reference is made to Fig. 1 illustrating a schematic diagram of a specific flow of a method for determining a relevant parameter in a beam space according to an embodiment of the invention, which includes the following operations 11-12.

In the operation 11, a user equipment receives common pilot signals which are transmitted concurrently from antennas intending to transmit the common pilot signal via respective antenna ports when the number of the antennas is no more than the number of the antenna ports but no less than two or which are transmitted from groups of antennas intending to transmit the common pilot signal via antenna ports in a time division duplexing manner after grouping the antennas when the number of the antennas is more than the number of the antenna ports, where the number of antennas in each group is no more than the number of the antenna ports.

In the operation 12, the user equipment determines a relevant parameter in a beam space of the user equipment from the received common pilot signals transmitted from the at least two antennas.

In the operation 11 taking a Time Division Duplexing (TDD) Long Term Evolution (LTE) system, LTE Release 8, as an example, when the common pilot signals are intended for transmission to the user equipment from the antennas in the base station, the common pilot signals may be transmitted via four antenna ports existing in the base station in the prior art. Therefore in order to ensure accuracy of the relevant parameters in the respective beam spaces of the user equipment determined subsequently by the user equipment from the received common pilot signals, the common pilot signals are transmitted directly to the user equipment from at least two of the antennas via two of the antenna ports when the number of antennas intending to transmit the common pilot signal is less than the number of antenna ports, that is, the number of antennas intending to transmit the common pilot signal is less than four; or when the number of antennas intending to transmit the common pilot signal is more than the number of antenna ports, the antennas may be grouped so that a part thereof forms a group, for example, when the number of antennas is eight, the antennas may be grouped into two groups, and the common pilot signals are transmitted to the user equipment from the groups of antennas via the four antenna ports in a time division duplexing manner at consecutive instances of time (e.g., at two different Transmission Time Intervals (TTI) or two different timeslots in a TTI), so that the user equipment can acquire the common pilot signals over the eight antennas at the two consecutive instances of time.

Therefore in the foregoing transmission, when the number of antennas intending to transmit the pilot signals is eight and they are grouped into two groups, the common pilot signals can be transmitted to the user equipment from one of the groups of antennas via the four antenna ports in one TTI and to the user equipment from the other group of antennas via the four antenna ports in the other TTI; and since each TTI in the TDD LTE system includes two timeslots, the common pilot signals can alternatively be transmitted to the user equipment from one group of antennas via the four antenna ports in a first timeslot of the TTI and to the user equipment from the other group of antennas via the four antenna ports in a second timeslot of the TTI, so that the common pilot signals can be transmitted to the user equipment from all of the eight antennas in a TTI.

Alike when the number of antennas intending to transmit the pilot signal is six and they are grouped into two groups, in one of which there are two antennas and in the other of which there are four antennas, the common pilot signals can be transmitted to the user equipment from two of the antennas via two of the antenna ports in one TTI and to the user equipment from the other four antennas via the four antenna ports in the other TTI; or the common pilot signals can be transmitted to the user equipment from two of the antennas via two of the antenna ports in a first timeslot of the TTI and to the user equipment from the other four antennas respectively via the four antenna ports in a second timeslot of the TTI.

In the operation 12, the relevant parameters in the respective beam spaces of the user equipment generally includes an average signal to noise ratio over the respective antennas of the user equipment, modulation and coding schemes available in the respective beam spaces of the user equipment and the number of beam spaces supportable by the user equipment, and for the different relevant parameters, the user equipment may determine the respective relevant parameters particularly as follows.

1. An average signal to noise ratio over the respective antennas of the user equipment is determined as follows:

the user equipment determines signal to noise ratios over the respective antennas of the user equipment respectively from the received common pilot signals; and

an average signal to noise ratio over the respective antennas of the user equipment is determined from the determined signal to noise ratios over the respective antennas of the user equipment.

2. Modulation and coding schemes available in the respective beam spaces of the user equipment are determined as follows:

the user equipment determines a downlink channel response matrix H and an average signal to noise ratio SINR over the respective antennas of the user equipment from the received common pilot signals;

Sigular Value Decomposition (SVD) is performed on the downlink channel response matrix H to derive eigenvalues $\lambda_i$ ($i$=1, 2, ..., $N$, where $N$ is the number of beam spaces) in the respective beam spaces;

active signal to noise ratios in respective beam spaces of the user equipment are calculated as follows:

$$SINR_i = SINR \cdot \lambda_i^2 ;$$ where it shall be noted that

the calculated $SINR_i$ is CQI information; and

a mapping relationship table between CQI and Modulation and Coding Schemes, MCS, is searched for $MCS_i$ supportable by respective beam space.

3. The number of beam spaces supportable by the user equipment is determined as follows:

after the eigenvalues $\lambda_i$ in the respective beam spaces are determined as above, the number $M$ of eigen beams of the beam spaces supportable by the user equipment can be determined from $SINR_i$ or $\lambda_i$ over the respective antennas of the user equipment, for example, $M$ can be determined by determining whether $SINR_i$ or $\lambda_i$ is above a certain threshold, where $M$ is a positive integer.

Correspondingly, a user equipment for determining a relevant parameter in a beam space is provided to address the problem in the prior art of determining quality information of a channel inaccurately, and reference is made to Fig. 2 illustrating a schematic diagram of a specific structure of the user equipment including:

a reception unit 21 configured to receive common pilot signals which are transmitted concurrently from antennas intending to transmit the common pilot signals via respective antenna ports when the number of the antennas is no more than the number of the antenna ports but no less than two or which are transmitted from groups of antennas intending to transmit the common pilot signals via antenna ports in a time division duplexing manner after grouping the antennas when the number of the antennas is more than the number of the antenna ports, where the number of antennas in each group is no more than the number of the antenna ports; and

a determination unit 22 configured to determine a relevant parameter in a beam space of the user equipment from the common pilot signals transmitted from the at least two antennas and received by the reception unit.

Particularly, with regarding to the determination unit 22,

1. when the relevant parameter in the beam space to be determined is an average signal to noise ratio over respective antennas of the user equipment, the determination unit 22 particularly includes: a signal to noise ratio determination module configured to determine signal to noise ratios over the respective antennas of the user equipment respectively from the common pilot signals received by the reception unit 21; and an average signal to noise ratio determination module configured to determine the average signal to noise ratio over the respective antennas of the user equipment from the signal to noise ratios determined by the signal to noise ratio determination module;

2. when the relevant parameter in the beam space to be determined is modulation and coding scheme available in the beam space of the user equipment, the determination unit 22 particularly includes: a determination module configured to determine a downlink channel response matrix and an average signal to noise ratio in respective beam spaces from the common pilot signals received by the reception unit 21; and a decomposition module configured to perform sigular value decomposition on the matrix determined by the determination module to derive eigenvalues in the respective beam spaces;

an active signal to noise ratio determination module configured to determine active signal to noise ratios in respective beam spaces of the user equipment as the product of the average signal to noise ratio determined by the determination module and the square of the eigenvalues in the respective beam space derived by the decomposition module; and a search module configured to search, with the active signal to noise ratios determined by the active signal to noise ratio determination module, a mapping relationship table between active signal to noise ratios and modulation and coding schemes for the modulation and coding schemes available in the respective beam spaces; and

3. when the relevant parameter in the beam space to be determined is modulation and coding schemes available in the respective beam spaces of the user equipment and the number of beam spaces supportable by the user equipment, the determination unit 22 particularly includes: a first determination module configured to determine a downlink channel response matrix and an average signal to noise ratio over the respective antennas of the user equipment from the common pilot signals received by the reception unit 21; a decomposition module configured to perform sigular value decomposition on the matrix determined by the first determination module to derive eigenvalues in the respective beam spaces; an active signal to noise ratio determination module configured to determine active signal to noise ratios in the respective beam spaces of the user equipment as the product of the average signal to noise ratio over the respective antennas of the user equipment determined by the first determination module and the square of the eigenvalues derived by the decomposition module; a search module configured to search, with the active signal to noise ratios determined by the active signal to noise ratio determination module, a mapping relationship table between active signal to noise ratios and modulation and coding schemes for the modulation and coding schemes available in the respective beam space; and a second determination module configured to determine the number of beam spaces supportable by the user equipment from the eigenvalues in the respective beam spaces derived by the decomposition module or from the active signal to noise ratios in the respective beam spaces of the user equipment determined by the active signal to noise ratio determination module.

After the user equipment feeds back the determined relevant parameters in the respective beam spaces to a base station, an embodiment of the invention provides a method for forming a signal in a beam space by performing an accurate forming process on the signal to be transmitted in the beam space of the user equipment according to the relevant parameters determined in the method of the foregoing embodiment and fed back from the user equipment.

In the prior art, the user equipment feeds only the modulation and coding schemes among the relevant parameters in the respective beam spaces back to the base station after determining the relevant parameters, and the base station further determines from the modulation and coding schemes a parameter with which a forming process is performed on a signal to be transmitted in a beam space of the user equipment. However in a method for forming a signal in a beam space according to an embodiment of the invention, the user equipment may not be limited to feed the modulation and coding schemes to the base station. For example, the user equipment may feed the determined average signal to noise ratio over respective antennas of the user equipment back to the base station, and in this case, the base station may determine the modulation and coding schemes from the average signal to noise ratio upon reception thereof and determines the number of beam spaces supportable by the user equipment and a forming parameter from an echo signal over an uplink channel, so that some of functions to be performed at the user equipment in the prior art can be performed by the base station, thereby lowing required performance of the user equipment; and in the case that the user equipment feeds back to the base station the relevant parameters including the modulation and coding schemes and the number of beam spaces supportable by the user equipment, it is sufficient for the base station to determine a forming parameter from an echo signal over an uplink channel, thus lowing required performance of the base station.

The method according to embodiments of the invention will be described in details hereinafter with reference to the drawings.

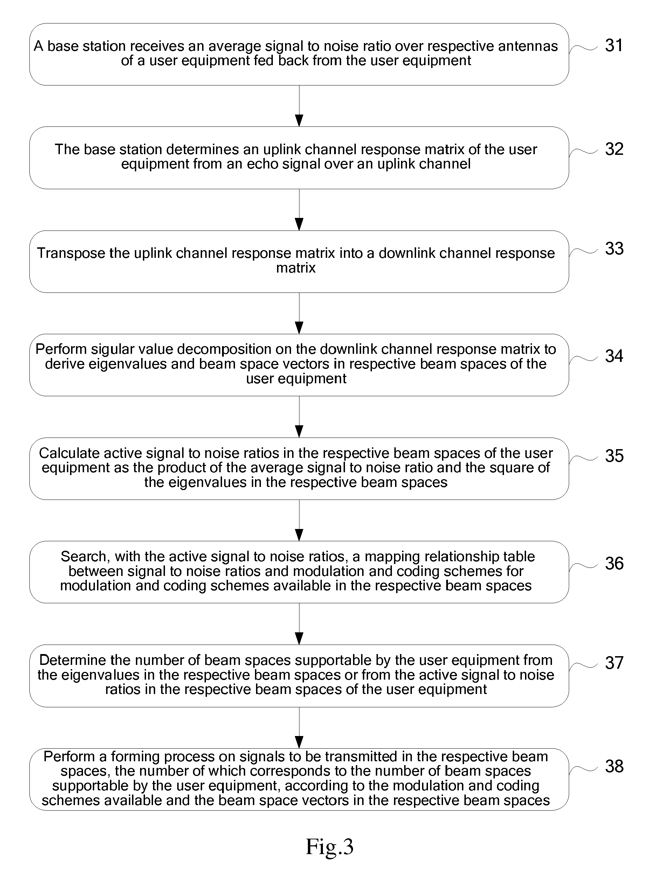

Since a base station may receive a different relevant parameter transmitted from a user equipment, a forming process performed on a signal to be transmitted in a beam space of the user equipment will vary as well and therefore different methods for forming a signal in a beam space are proposed for different relevant parameters fed back from the user equipment according to the embodiments of the invention. It shall be noted that the relevant parameters fed back from the user equipment to the base station including an average signal to noise ratio over respective antennas, modulation and coding schemes, the number of beam spaces supportable by the user equipment, etc., may relate to at least two antennas but will not be limited thereto. For example, the relevant parameters may be determined from a common pilot signal transmitted over one of the antenna as in the prior art. Therefore, a method will also come into the scope of the invention in which a base station forms a signal in a beam space according to a relevant parameter determined from a common pilot signal transmitted over a single antenna and fed back from a user equipment. Reference is made to Fig. 3 illustrating a schematic diagram of a specific flow of a method for forming a signal in a beam space according to an embodiment of the invention, which includes the following operations 31-38.

In the operation 31, a base station receives an average signal to noise ratio SINR over respective antennas of a user equipment fed back from the user equipment;

In the operation 32, the base station determines an uplink channel response matrix $H_1$ of the user equipment from an echo signal over an uplink channel;

In the operation 33, $H_1$ is transposed into a downlink channel response matrix $H_2$;

In the operation 34, sigular value decomposition is performed on $H_2$ to derive eigenvalues $\lambda_i$ and beam space vectors $\hat{v}_i$ in respective beam spaces of the user equipment, where $i = 1,2,..., \hat{N}$, and $\hat{N}$ is the order of a determined downlink channel response;

In the operation 35, active signal to noise ratios $SINR_i$ in respective beam spaces of the user equipment are calculated as the product of the average signal to noise ratio SINR and the square of the eigenvalues in the respective beam spaces, i.e., $SINR_i = SINR \cdot \lambda_i^2$ ;

In the operation 36, a mapping relationship table between $SINR_i$ and $MCS_i$ is searched, with $SINR_i$, for $MCS_i$ in the respective beam space;

In the operation 37, the number $M$ of beam spaces supportable by the user equipment is determined from the eigenvalues $\hat{\lambda}_i$ in the respective beam spaces or from the active signal to noise ratios $SINR_i$ in the respective beam spaces of the user equipment;

In the operation 38, signals to be transmitted in respective beam spaces, the number of which corresponds to the number $M$ of beam spaces supportable by the user equipment, are formed according to the modulation and coding schemes $MCS_i$ available and the beam space vectors $\hat{v}_i$ in the respective beam spaces.

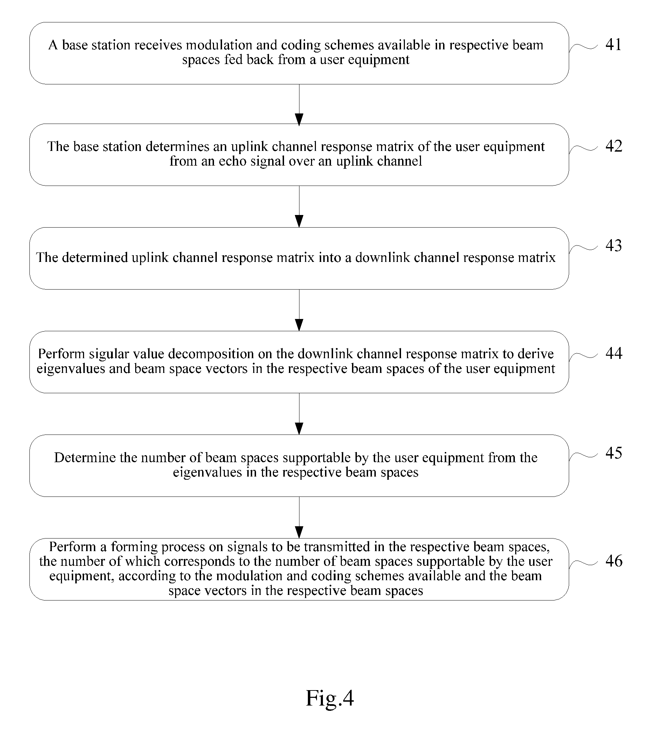

Reference is made to Fig. 4 illustrating a schematic diagram of a specific flow of another method for forming a signal in a beam space according to an embodiment of the invention, which includes the following operations 41-46.

In the operation 41, a base station receives modulation and coding schemes $MCS_i$ available in respective beam spaces fed back from a user equipment;

In the operation 42, the base station determines an uplink channel response matrix $H_1$ of the user equip-

ment from an echo signal over an uplink channel;

In the operation 43, the determined uplink channel response matrix $H_1$ is transposed into a downlink channel response matrix $H_2$;

In the operation 44, sigular value decomposition is performed on the downlink channel response matrix to derive eigenvalues $\hat{\lambda}_i$ and beam space vectors $\hat{v}_i$ in the respective beam spaces of the user equipment, where $i = 1,2,..., \hat{N}$, and $\hat{N}$ is the order of an estimated downlink channel response;

In the operation 45, the number $M$ of beam spaces supportable by the user equipment is determined from $\hat{\lambda}_i$ in the respective beam spaces;

In the operation 46, signals to be transmitted in respective beam spaces, the number of which corresponds to the number $M$ of beam spaces supportable by the user equipment, are formed according to the modulation and coding schemes $MCS_i$ available and the beam space vectors $\hat{v}_i$ in the respective beam spaces.

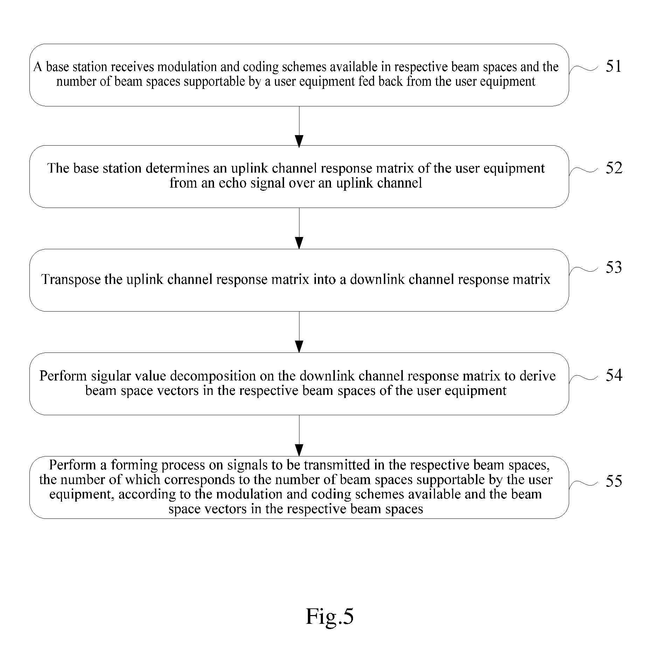

Reference is made to Fig. 5 illustrating a schematic diagram of a specific flow of still another method for forming a signal in a beam space according to an embodiment of the invention, which includes the following operations 51-55.

In the operation 51, a base station receives modulation and coding schemes $MCS_i$ available in respective beam spaces and the number $M$ of beam spaces supportable by a user equipment fed back from the user equipment;

In the operation 52, the base station determines an uplink channel response matrix $H_1$ of the user equipment from an echo signal over an uplink channel;

In the operation 53, $H_1$ is transposed into a downlink channel response matrix $H_2$;

In the operation 54, sigular value decomposition is performed on $H_2$ to derive beam space vectors $\hat{v}_i$ in the respective beam spaces of the user equipment;

In the operation 55, signals to be transmitted in the respective beam spaces, the number of which corresponds to the number $M$ of beam spaces supportable by the user equipment, are formed according to the modulation and coding schemes $MCS_i$ available and the beam space vectors $\hat{v}_i$ in the respective beam spaces.

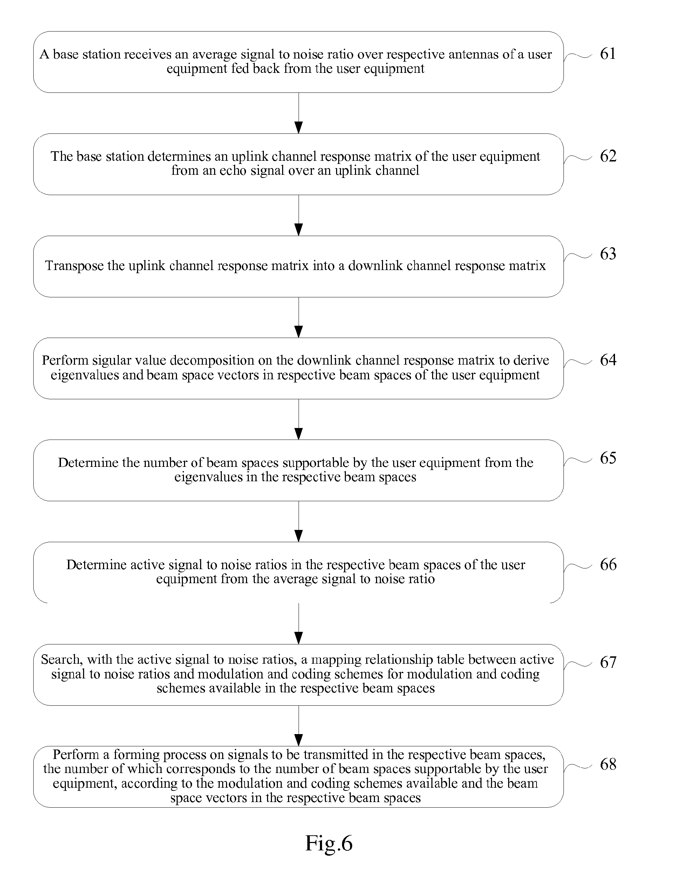

Reference is made to Fig. 6 illustrating a schematic diagram of a specific flow of a further method for forming a signal in a beam space according to an embodiment of the invention, which includes the following operations 61-68,

In the operation 61, a base station receives an average signal to noise ratio SINR over respective antennas of a user equipment fed back from the user equipment;

In the operation 62, the base station determines an uplink channel response matrix $H_1$ of the user equipment from an echo signal over an uplink channel;

In the operation 63, $H_1$ is transposed into a downlink channel response matrix $H_2$;

In the operation 64, sigular value decomposi-

tion is performed on $H_2$ to derive eigenvalues $\hat{\lambda}_i$ and beam space vectors $\hat{v}_i$ in respective beam spaces of the user equipment, where $i = 1,2,..., \hat{N}$ and $\hat{N}$ is the order of a determined downlink channel response;

In the operation 65, the number $M$ of beam spaces supportable by the user equipment is determined from the eigenvalues $\hat{\lambda}_i$ in the respective beam spaces;

In the operation 66, active signal to noise ratios in the respective beam spaces of the user equipment is determined in the following formula:

$$SINR_i = SINR \cdot \hat{\lambda}_i^2 \cdot \frac{p_i \cdot \hat{N}}{P},$$

where $SINR_i$ is the active signal to noise ratios in the respective beam space of the user equipment, $SINR$ is the average signal to noise ratio over the respective antennas of the user equipment, $\lambda_i$ is the eigenvalues in the respective beam spaces, $p_i$ is power allocated to the respective beam spaces, $P$ is the sum of power allocated to the respective beam spaces, and $\hat{N}$ is the number of beam spaces supportable by the user equipment;

In the operation 67, a mapping relationship table between $SINR_i$ and $MCS_i$ is searched, with the active signal to noise ratios $SINR_i$, for $MCS_i$ in the respective beam spaces;

In the operation 68, signals to be transmitted in the respective beam spaces, the number of which corresponds to the number $M$ of beam spaces supportable by the user equipment, are formed according to $MCS_i$ available and the beam space vectors $\hat{v}_i$ in the respective beam space.

It shall be noted that $SINR_i$ corresponding to received $MCS_i$ may be obtained by searching the mapping relationship table between $MCS_i$ and $SINR_i$ with the received $MCS_i$, and then SINR of a signal received by the user equipment may further be calculated from the obtained $SINR_i$ in combination with the eigenvalues $\hat{\lambda}_i$ in the respective beam spaces in the following formula:

$$SINR = \frac{1}{\hat{N} \cdot \sum_{i=1}^{\hat{N}} (SINR_i / \hat{\lambda}^2)}$$

Therefore, when the user equipment uploads a relevant parameter of $MCS_i$, SINR may be derived from the $MCS_i$ and then a forming process may be performed on a signal to be transmitted in a beam space in the schematic diagram of the specific flow demonstrated in Fig. 6, and a repeated description of the specific flow will be omitted here.

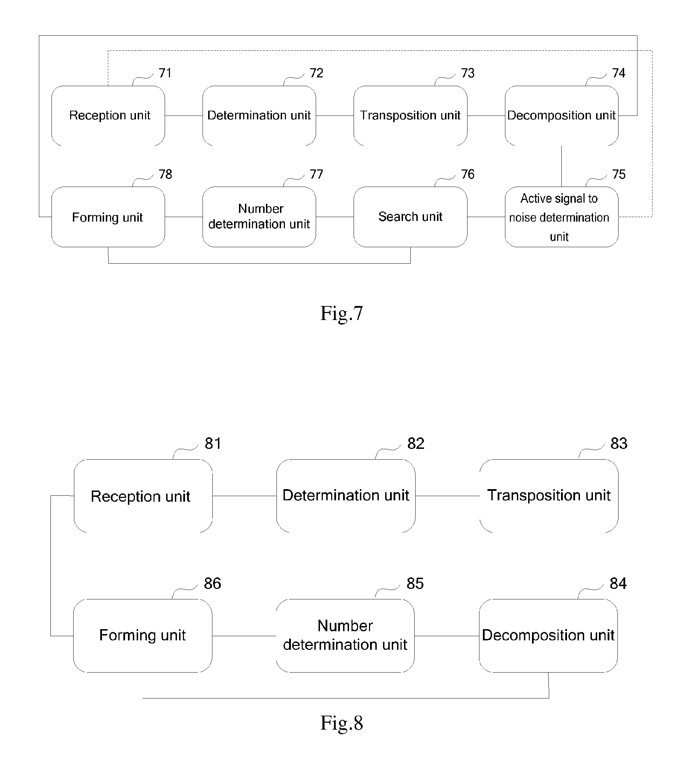

Correspondingly, an embodiment of the invention provides a base station for forming a signal in a beam space, and reference is made to Fig. 7 illustrating a schematic diagram of a specific structure thereof, which includes:

a reception unit 71 configured to receive an average signal to noise ratio over respective antennas of a user equipment fed back from the user equipment;

a determination unit 72 configured to determine an uplink channel response matrix of the user equipment from an echo signal over an uplink channel;

a transposition unit 73 configured to transpose the uplink channel response matrix determined by the determination unit 72 into a downlink channel response matrix;

a decomposition unit 74 configured to perform sigular value decomposition on the downlink channel response matrix generated by the transposition unit 73 to derive eigenvalues and beam space vectors in respective beam spaces of the user equipment;

an active signal to noise ratio determination unit 75 configured to determine active signal to noise ratios in the respective beam spaces of the user equipment as the product of the average signal to noise ratio received by the reception unit 71 and the square of the eigenvalues in the respective beam spaces derived by the decomposition unit 74;

A search unit 76 configured to search, with the active signal to noise ratios determined by the active signal to noise ratio determination unit 75, a mapping relationship table between active signal to noise ratios and modulation and coding schemes for modulation and coding schemes available in the respective beam space;

a number determination unit 77 configured to determine the number of beam spaces supportable by the user equipment from the eigenvalues in the respective beam spaces derived by the decomposition unit 74 or the active signal to noise ratios in the respective beam spaces of the user equipment determined by the active signal to noise ratio determination unit 75; and

A forming unit 78 configured to perform a forming process on signals to be transmitted in respective beam spaces, the number of which corresponds to the number of beam spaces determined by the number determination unit 77, according to the modulation and coding schemes available in the respective beam spaces retrieved by the search unit 76 and the beam space vectors derived by the decomposition unit 74.

Correspondingly, an embodiment of the invention provides another base station of forming a signal in a beam space, and reference is made to Fig. 8 illustrating a schematic diagram of a specific structure thereof, which includes:

a reception unit 81 configured to receive modulation and coding schemes available in respective beam spaces fed back from a user equipment;

a determination unit 82 configured to determine an uplink channel response matrix of the user equipment from an echo signal over an uplink channel;

a transposition unit 83 configured to transpose the uplink channel response matrix determined by the determination unit 82 into a downlink channel response matrix;

a decomposition unit 84 configured to perform sigular value decomposition on the downlink channel response matrix generated by the transposition unit 83 to derive eigenvalues and beam space vectors in the respective beam spaces of the user equipment;

a number determination unit 85 configured to determine the number of beam spaces supportable by the user equipment from the eigenvalues in the respective beam spaces derived by the decomposition unit 84; and

A forming unit 86 configured to perform a forming process on signals to be transmitted in respective beam spaces, the number of which corresponds to the number of beam spaces determined by the number determination unit 85, according to the modulation and coding schemes available in the respective beam spaces received by the reception unit 81 and the beam space vectors derived by the decomposition unit 84.

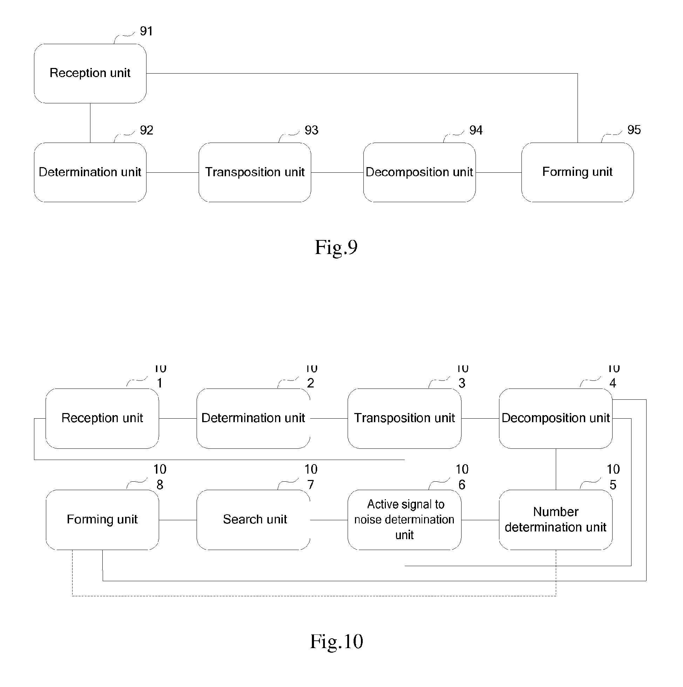

Correspondingly, an embodiment of the invention provides a base station of forming a signal in a beam space, and reference is made to Fig. 9 illustrating a schematic diagram of a specific structure thereof, which includes:

a reception unit 91 configured to receive modulation and coding schemes available in respective beam spaces and the number of beam spaces supportable by a user equipment fed back from the user equipment;

a determination unit 92 configured to determine an uplink channel response matrix of the user equipment from an echo signal over an uplink channel;

a transposition unit 93 configured to transpose the uplink channel response matrix determined by the determination unit 92 into a downlink channel response matrix;

a decomposition unit 94 configured to perform sigular value decomposition on the downlink channel response matrix generated by the transposition unit 93 to derive beam space vectors in the respective beam spaces of the user equipment; and

a forming unit 95 configured to perform a forming process on signals to be transmitted in respective beam spaces, the number of which corresponds to the number of beam spaces supportable by the user equipment received by the reception unit 91, according to the modulation and coding schemes available in the respective beam spaces received by the reception unit 91 and the beam space vectors derived by the decomposition unit 94.

Correspondingly, an embodiment of the invention provides a further base station of forming a signal in a beam space, and reference is made to Fig. 10 illustrating a schematic diagram of a specific structure thereof, which includes:

a reception unit 101 configured to receive an average signal to noise ratio over respective antennas of a user equipment fed back from the user equipment;

a determination unit 102 configured to determine an uplink channel response matrix of the user equipment from an echo signal over an uplink channel;

a transposition unit 103 configured to transpose the uplink channel response matrix determined by the determination unit 102 into a downlink channel response matrix;

a decomposition unit 104 configured to perform sigular value decomposition on the downlink channel response matrix generated by the transposition unit 103 to derive eigenvalues and beam space vectors in respective beam spaces of the user equipment;

a number determination unit 105 configured to determine the number of beam spaces supportable by the user equipment from the eigenvalues in the respective beam spaces derived by the decomposition unit 104;

an active signal to noise ratio determination unit 106 configured to determine active signal to noise ratios in the respective beam spaces of the user equipment in the following formula:

$$ SINR_i = SINR \cdot \hat{\lambda}_i^2 \cdot \frac{p_i \cdot \hat{N}}{P}, $$

where $SINR_i$ is the active signal to noise ratios in the respective beam spaces of the user equipment, $SINR$ is the average signal to noise ratio over the respective antennas of the user equipment received by the reception unit 101, $\hat{\lambda}_i$ is the eigenvalues in the respective beam spaces derived by the decomposition unit 104, $p_i$ is power allocated from the base station to the respective beam spaces, $P$ is the sum of power allocated from the base station to the respective beam spaces, and $\hat{N}$ is the number of beam spaces supportable by the user equipment determined by the number determination unit 105;

a search unit 107 configured to search, with the active signal to noise ratios determined by the active signal to noise ratio determination unit 106, a mapping relationship table between active signal to noise ratios and modulation and coding schemes for modulation and coding schemes available in the respective beam spaces; and

a forming unit 108 configured to perform a forming process on signals to be transmitted in respective beam spaces, the number of which corresponds to the number of beam spaces supportable by the user equipment determined by the number determination unit 105, according to the modulation and coding schemes available in the respective beam spaces retrieved by the search unit 107 and the beam space vectors derived by the decomposition unit 104.

It shall be noted that in the foregoing solutions of forming a signal in a beam space, a parameter related to a forming process transmitted from a user equipment and received by a base station (e.g., an average signal to noise ratio over respective antennas of a user equipment, modulation and coding schemes available in respective beam spaces, the number of beam spaces supportable by the user equipment, etc.) may be determined by the user equipment from common pilot signals transmitted from at least two antennas but will not be limited thereto, and also the parameter received by the base station may be determined by the user equipment from a common pilot signal transmitted from one of the antennas without departing from the scope of the invention.

Furthermore, in the embodiments of the invention, an echo signal over an uplink channel received by a base station may be fed back over a full frequency band or a part of bandwidths into which the full frequency band is divided. For example, the full frequency band is divided into twenty-five bandwidths, and the echo signal over the uplink channel is fed back over five of the bandwidths resulting from division with better performance, or the full frequency band is divided into bandwidths of 5 RB, and the echo signal over the uplink channel is fed back over any number of selected bandwidths resulting from division. Particularly in the case that the full frequency band is divided and the echo signal over the uplink channel is fed back over a part of bandwidths resulting from division, the echo signal over the uplink channel can be fed back over one or more appropriate bandwidths, thereby obviating a problem of significant resources wasted to feed back the echo signal over the uplink channel over the full frequency band.

Evidently those skilled in the art may make various modifications and variations to the invention without departing from the scope of the invention. Thus the invention is also intended to encompass these modifications and variations thereto provided the modifications and variations come into the scope of the claims appended to the invention and their equivalents.

**Claims**

1. A method for determining a relevant parameter in a beam space, comprising:

   receiving by a user equipment common pilot signals transmitted respectively from at least two antennas in a base station, wherein the common pilot signals are transmitted from the antennas intending to transmit the common pilot signals respectively via antenna ports when the number of the antennas is no more than the number of the antenna ports, or the common pilot signals are transmitted from groups of antennas intending to transmit the common pilot signals via the antenna ports in a time division duplexing manner after grouping the antennas when the number of the antennas is more than the number of the antenna ports, wherein the number of antennas in each group is no more than the number of the antenna ports; and

determining by the user equipment a relevant parameter in a beam space of the user equipment from received common pilot signals transmitted respectively from the at least two antennas.

2. The method of claim 1, wherein the relevant parameter in the beam space is an average signal to noise ratio over the respective antennas of the user equipment; and

determining by the user equipment the relevant parameter in the beam space from the received common pilot signals transmitted respectively from the at least two antennas comprises:

determining, by the user equipment, signal to noise ratios over the respective antennas of the user equipment respectively from the received common pilot signals transmitted respectively from the at least two antennas; and

determining the average signal to noise ratio over the respective antennas of the user equipment from determined noise ratios over the respective antennas of the user equipment.

3. The method of claim 1, wherein the relevant parameter in the beam space is modulation and coding schemes available in respective beam spaces of the user equipment; and

determining by the user equipment the relevant parameter in the beam space from the received common pilot signals transmitted respectively from the at least two antennas comprises:

determining by the user equipment a downlink channel response matrix and an average signal to noise ratio over the respective antennas of the user equipment from the received common pilot signals transmitted respectively from the at least two antennas;

performing sigular value decomposition on the downlink channel response matrix to derive eigenvalues in the respective beam spaces;

calculating active signal to noise ratios in the respective beam spaces of the user equipment as the product of the average signal to noise ratio and the square of the eigenvalues in the respective beam spaces; and

searching, with the active signal to noise ratios, a mapping relationship table between active signal to noise ratios and modulation and coding schemes for the modulation and coding schemes available in the respective beam spaces.

4. The method of claim 1, wherein the relevant parameter in the beam space is modulation and coding schemes available in respective beam spaces of the user equipment and the number of beam spaces supportable by the user equipment; and

determining by the user equipment the relevant parameter in the beam space from the received common pilot signals transmitted respectively from the at least two antennas comprises:

determining by the user equipment a downlink channel response matrix and an average signal to noise ratio over the respective antennas of the user equipment from the received common pilot signals transmitted respectively from the at least two antennas;

performing sigular value decomposition on the downlink channel response matrix to derive eigenvalues in the respective beam spaces;

calculating active signal to noise ratios in the respective beam spaces of the user equipment as the product of the average signal to noise ratio over the respective antennas of the user equipment and the square of the eigenvalues; and

searching, with the active signal to noise ratios, a mapping relationship table between active signal to noise ratios and modulation and coding schemes for the modulation and coding schemes available in the respective beam spaces;

determining by the user equipment the number of supportable beam spaces from the eigenvalues in the respective beam spaces or from the active signal to noise ratios.

5. A user equipment for determining a relevant parameter in a beam space, comprising:

a reception unit configured to receive common pilot signals transmitted respectively from at least two antennas in a base station, wherein the common pilot signals are transmitted from the antennas intending to transmit the common pilot signals respectively via antenna ports when the number of the antennas is no more than the number of the antenna ports, or the common pilot signals are transmitted from groups of the antennas intending to transmit the common pilot signals via the antenna ports in a time division duplexing manner after grouping the antennas when the number of the antennas is more than the number of the antenna ports, wherein the number of antennas in each group is no more than the number of the antenna ports; and

a determination unit configured to determine a relevant parameter in a beam space of the user equipment from the common pilot signals transmitted respectively from the at least two antennas and received by the reception unit.

6. The user equipment of claim 5, wherein the relevant parameter in the beam space is an average signal to noise ratio over the respective antennas of the user equipment; and
the determination unit comprises:

a signal to noise ratio determination module configured to determine signal to noise ratios over the respective antennas of the user equipment respectively from the common pilot signals transmitted respectively from the at least two antennas and received by the reception unit; and
an average signal to noise ratio determination module configured to determine the average signal to noise ratio over the respective antennas of the user equipment from the signal to noise ratios over the respective antennas of the user equipment determined by the signal to noise ratio determination module.

7. The user equipment of claim 5, wherein the relevant parameter in the beam space is modulation and coding schemes available in respective beam spaces of the user equipment, and
the determination unit comprises:

a determination module configured to determine a downlink channel response matrix and an average signal to noise ratio over the respective antennas of the user equipment from the common pilot signals transmitted respectively from the at least two antennas and received by the reception unit;
a decomposition module configured to perform sigular value decomposition on the matrix determined by the determination module to derive eigenvalues in the respective beam spaces;
an active signal to noise ratio determination module configured to determine active signal to noise ratios in the respective beam spaces of the user equipment as the product of the average signal to noise ratio determined by the determination module and the square of the eigenvalues in the respective beam spaces derived by the decomposition module; and
a search module configured to search, with the active signal to noise ratios determined by the active signal to noise ratio determination module, a mapping relationship table between active signal to noise ratios and modulation and coding schemes for the modulation and coding schemes available in the respective beam spaces.

8. The user equipment of claim 5, wherein the relevant parameter in the beam space is modulation and coding schemes available in respective beam spaces of the user equipment and the number of beam spaces supportable by the user equipment; and
the determination unit comprises:

a first determination module configured to determine a downlink channel response matrix and an average signal to noise ratio over the respective antennas of the user equipment from the common pilot signals transmitted respectively from the at least two antennas and received by the reception unit;
a decomposition module configured to perform sigular value decomposition on the matrix determined by the first determination module to derive eigenvalues in the respective beam spaces;
an active signal to noise ratio determination module configured to determine active signal to noise ratios in the respective beam spaces of the user equipment as the product of the average signal to noise ratio over the respective antennas of the user equipment determined by the first determination module and the square of the eigenvalues derived by the decomposition module;
a search module configured to search, with the active signal to noise ratios determined by the active signal to noise ratio determination module, a mapping relationship table between active signal to noise ratios and modulation and coding schemes for the modulation and coding schemes available in the respective beam spaces; and
a second determination module configured to determine the number of beam spaces supportable by the user equipment from the eigenvalues in the respective beam spaces derived by the decomposition module or from the active signal to noise ratios in the respective beam spaces of the user equipment determined by the active signal to noise ratio determination module.

9. A method for forming a signal in a beam space, comprising:

receiving by a base station a relevant forming parameter in a beam space of a user equipment fed back from the user equipment, wherein, the parameter is determined by the user equipment from common pilot signals transmitted respectively from at least two antennas; and
performing a forming process on signals to be transmitted in respective beam spaces of the user equipment according to the parameter.

10. The method of claim 9, wherein the relevant forming parameter is an average signal to noise ratio over the respective antennas of the user equipment; and performing the forming process on the signals to be transmitted in the respective beam spaces of the user equipment according to the parameter comprises:

determining by the base station an uplink channel response matrix of the user equipment from an echo signal over an uplink channel;
transposing determined uplink channel response matrix into a downlink channel response matrix;
performing sigular value decomposition on the downlink channel response matrix to derive eigenvalues and beam space vectors in the respective beam spaces of the user equipment;
calculating active signal to noise ratios in the respective beam spaces of the user equipment as the product of the average signal to noise ratio and the square of the eigenvalues in the respective beam spaces; and
searching, with the active signal to noise ratios, a mapping relationship table between active signal to noise ratios and modulation and coding schemes for modulation and coding schemes available in the respective beam spaces;
determining the number of beam spaces supportable by the user equipment from the eigenvalues in the respective beam spaces or from the active signal to noise ratios in the respective beam spaces of the user equipment; and
performing the forming process on the signals to be transmitted in the respective beam spaces, the number of which corresponds to the number of beam spaces supportable by the user equipment, according to the modulation and coding schemes available and the beam space vectors in the respective beam spaces.

11. The method of claim 9, wherein the relevant forming parameter is modulation and coding schemes available in the respective beam spaces of the user equipment, and performing the forming process on the signals to be transmitted in the respective beam spaces of the user equipment according to the parameter comprises:

determining by the base station an uplink channel response matrix of the user equipment from an echo signal over an uplink channel;
transposing determined uplink channel response matrix into a downlink channel response matrix;
performing sigular value decomposition on the downlink channel response matrix to derive eigenvalues and beam space vectors in the respective beam spaces of the user equipment;
determining the number of beam spaces supportable by the user equipment from the eigenvalues in the respective beam spaces; and
performing the forming process on the signals to be transmitted in the respective beam spaces, the number of which corresponds to the number of beam spaces supportable by the user equipment, according to the modulation and coding schemes available and the beam space vectors in the respective beam spaces.

12. The method of claim 9, wherein the relevant forming parameter is modulation and coding schemes available in the respective beam spaces of the user equipment and the number of beam spaces supportable by the user equipment; and performing the forming process on the signals to be transmitted in the respective beam spaces of the user equipment according to the parameter comprises:

determining by the base station an uplink channel response matrix of the user equipment from an echo signal over an uplink channel;
transposing determined uplink channel response matrix into a downlink channel response matrix;
performing sigular value decomposition on the downlink channel response matrix to derive beam space vectors in the respective beam spaces of the user equipment; and
performing the forming process on the signals to be transmitted in the respective beam spaces, the number of which corresponds to the number of beam spaces supportable by the user equipment, according to the modulation and coding schemes available and the beam space vectors in the respective beam spaces.

13. The method of claim 9, wherein the relevant forming parameter is an average signal to noise ratio over the respective antennas of the user equipment; and performing the forming process on the signals to be transmitted in the respective beam spaces of the user equipment according to the parameter comprises:

determining by the base station an uplink channel response matrix of the user equipment from an echo signal over an uplink channel;
transposing the uplink channel response matrix into a downlink channel response matrix;
performing sigular value decomposition on the downlink channel response matrix to derive eigenvalues and beam space vectors in the respective beam spaces of the user equipment;
determining the number of beam spaces supportable by the user equipment from the eigenvalues in the respective beam spaces;
determining active signal to noise ratios in the respective beam spaces of the user equipment in the following formula:

$$SINR_i = SINR \cdot \hat{\lambda}_i^2 \cdot \frac{p_i \cdot \hat{N}}{P},$$

wherein $SINR_i$ is the active signal to noise ratios in the respective beam spaces of the user equipment, $SINR$ is the average signal to noise ratio over the respective antennas of the user equipment, $\hat{\lambda}_i$ is the eigenvalues in the respective beam spaces, $p_i$ is power allocated to the respective beam spaces, $P$ is the sum of power allocated to the respective beam spaces, and $\hat{N}$ is the number of beam spaces supportable by the user equipment;

searching, with the active signal to noise ratios, a mapping relationship table between active signal to noise ratios and modulation and coding schemes for modulation and coding schemes available in the respective beam spaces; and

performing the forming process on the signals to be transmitted in the respective beam spaces, the number of which corresponds to the number of beam spaces supportable by the user equipment, according to the modulation and coding schemes available and the beam space vectors in the respective beam spaces.

14. A base station for forming a signal in a beam space, comprising:

a reception unit configured to receive a relevant forming parameter in a beam space of a user equipment fed back from the user equipment, wherein the parameter is determined by the user equipment from common pilot signals transmitted respectively from at least two antennas; and

a forming unit configured to perform a forming process on signals to be transmitted in respective beam spaces of the user equipment according to the parameter received by the reception unit.

15. The base station of claim 14, wherein the relevant forming parameter is an average signal to noise ratio over the respective antennas of the user equipment; and

the forming unit comprises:

a determination module configured to determine an uplink channel response matrix of the user equipment from an echo signal over an uplink channel;

a transposition module configured to transpose the uplink channel response matrix determined by the determination module into a downlink channel response matrix;

a decomposition module configured to perform sigular value decomposition on the downlink channel response matrix generated by the transposition module to derive eigenvalues and beam space vectors in the respective beam spaces of the user equipment;

an active signal to noise ratio determination module configured to determine active signal to noise ratios in the respective beam spaces of the user equipment as the product of the average signal to noise ratio received by the reception unit and the square of the eigenvalues in the respective beam spaces derived by the decomposition module;

a search module configured to search, with the active signal to noise ratios determined by the active signal to noise ratio determination module, a mapping relationship table between active signal to noise ratios and modulation and coding schemes for modulation and coding schemes available in the respective beam spaces;

a number determination module configured to determine the number of beam spaces supportable by the user equipment from the eigenvalues in the respective beam spaces derived by the decomposition module or from the active signal to noise ratios in the respective beam spaces determined by the active signal to noise ratio determination module; and

a forming module configured to perform the forming process on the signals to be transmitted in the respective beam spaces, the number of which corresponds to the number of beam spaces determined by the number determination module, according to the modulation and coding schemes available in the respective beam spaces retrieved by the search module and the beam space vectors derived by the decomposition module.

16. The base station of claim 14, wherein the relevant forming parameter is modulation and coding schemes available in the respective beam spaces of the user equipment; and

the forming module comprises:

a determination module configured to determine an uplink channel response matrix of the user equipment from an echo signal over an uplink channel;

a transposition module configured to transpose the uplink channel response matrix determined by the determination module into a downlink channel response matrix;

a decomposition module configured to perform sigular value decomposition on the downlink channel response matrix generated by the transposition module to derive eigenvalues and beam space vectors in the respective beam spaces of the user equipment;

a number determination module configured to determine the number of beam spaces supportable by the user equipment from the eigenvalues in the respective beam spaces derived by the decomposition module; and

a forming module configured to perform the forming process on the signals to be transmitted in the respective beam spaces, the number of which corresponds to the number of beam spaces determined by the number determination module, according to the modulation and coding schemes available in the respective beam spaces received by the reception unit and the beam space vectors derived by the decomposition module.

17. The base station of claim 14, wherein the relevant forming parameter is modulation and coding schemes available in the respective beam spaces of the user equipment and the number of beam spaces supportable by the user equipment; and

the forming unit comprises:

a determination module configured to determine an uplink channel response matrix of the user equipment from an echo signal over an uplink channel;

a transposition module configured to transpose the uplink channel response matrix determined by the determination module into a downlink channel response matrix;

a decomposition module configured to perform sigular value decomposition on the downlink channel response matrix generated by the transposition module to derive beam space vectors in the respective beam spaces of the user equipment; and

a forming module configured to perform the forming process on the signals to be transmitted in the respective beam spaces, the number of which corresponds to the number of beam spaces supportable by the user equipment received by the reception unit, according to the modulation and coding schemes available in the respective beam spaces received by the reception unit and the beam space vectors in the respective beam spaces derived by the decomposition module.

18. The base station of claim 14, wherein the relevant forming parameter is an average signal to noise ratio over the respective antennas of the user equipment; and

the forming unit comprises:

a determination module configured to determine an uplink channel response matrix of the user equipment from an echo signal over an uplink channel;

a transposition module configured to transpose the uplink channel response matrix determined by the determination module into a downlink channel response matrix;

a decomposition module configured to perform sigular value decomposition on the downlink channel response matrix generated by the transposition module to derive eigenvalues and beam space vectors in the respective beam spaces of the user equipment;

a number determination module configured to determine the number of beam spaces supportable by the user equipment from the eigenvalues in the respective beam spaces derived by the decomposition module;

an active signal to noise ratio determination module configured to determine active signal to noise ratios in the respective beam spaces of the user equipment in the following formula:

$$SINR_i = SINR \cdot \hat{\lambda}_i^2 \cdot \frac{p_i \cdot \hat{N}}{P},$$

wherein $SINR_i$ is the active signal to noise ratios in the respective beam spaces of the user equipment, $SINR$ is the average signal to noise ratio received by the reception unit, $\hat{\lambda}_i$ is the eigenvalues in the respective beam spaces derived by the decomposition module, $p_i$ is power allocated from the base station to the respective beam spaces, $P$ is the sum of power allocated from the base station to the respective beam spaces, and $\hat{N}$ is the number of beam spaces supportable by the user equipment determined by the number determination module;

a search module configured to search, with the active signal to noise ratios determined by the active signal to noise ratio determination module, a mapping relationship table between active signal to noise ratios and modulation and coding schemes for modulation and coding schemes available in the respective beam spaces; and

a forming module configured to perform the forming process on the signals to be transmitted in the respective beam spaces, the number of which corresponds to the number of beam spaces supportable by the user equipment determined by the number determination module, according to the modulation and coding schemes available in the respective beam spaces retrieved by the search module and the beam space vectors derived by the decomposition module.

19. A method for feeding back a relevant parameter in a beam space, comprising:

   determining, by a user equipment, signal to noise ratios over respective antennas of the user equipment from a received common pilot signal; determining an average signal to noise ratio over the respective antennas of the user equipment from determined signal to noise ratios over the respective antennas of the user equipment; and feeding determined average signal to noise ratio over the respective antennas back to a base station.

20. A user equipment for feeding back a relevant parameter in a beam space, comprising:

   a signal to noise ratio determination unit configured to determine signal to noise ratios over respective antennas of the user equipment from a received common pilot signal; an average signal to noise ratio determination unit configured to determine an average signal to noise ratio over the respective antennas of the user equipment from the signal to noise ratios determined by the signal to noise ratio determination unit; and a feedback unit configured to feed the average signal to noise ratio determined by the average signal to noise ratio determination unit back to a base station.

21. A method for feeding back a relevant parameter in a beam space, comprising:

   determining by a user equipment a downlink channel response matrix and an average signal to noise ratio over respective antennas of the user equipment from a received common pilot signal; performing sigular value decomposition on the downlink channel response matrix to derive eigenvalues in respective beam spaces; calculating active signal to noise ratios in the respective beam spaces of the user equipment as the product of the average signal to noise ratio over the respective antennas of the user equipment and the square of the eigenvalues; and searching, with the active signal to noise ratios, a mapping relationship table between active signal to noise ratios and modulation and coding schemes for modulation and coding schemes available in the respective beam spaces; determining by the user equipment the number of supportable beam spaces from the eigenvalues in the respective beam spaces or from the active signal to noise ratios; and feeding the modulation and coding schemes and the number of beam spaces back to a base station.

22. A user equipment for feeding back a relevant parameter in a beam space, comprising:

   a first determination unit configured to determine a downlink channel response matrix and an average signal to noise ratio over respective antennas of the user equipment from a received common pilot signal; a decomposition unit configured to perform sigular value decomposition on the downlink channel response matrix to derive eigenvalues in respective beam spaces; an active signal to noise ratio determination unit configured to determine active signal to noise ratios in the respective beam spaces of the user equipment as the product of the average signal to noise ratio determined by the first determination unit and the square of the eigenvalues in the respective beam spaces derived by the decomposition unit; a search unit configured to search, with the active signal to noise ratios determined by the active signal to noise ratio determination unit, a mapping relationship table between active signal to noise ratios and modulation and coding schemes for modulation and coding schemes available in the respective beam spaces; a second determination unit configured to determine the number of beam spaces supportable by the user equipment from the eigenvalues in the respective beam spaces derived by the decomposition unit or from the active signal to noise ratios over the respective antennas of the user equipment determined by the active signal to noise ratio determination unit; and a feedback unit configured to feed the modulation and coding schemes retrieved by the search unit and the number of beam spaces determined by the second determination unit back to the base station.

23. A method for forming a signal in a beam space, comprising:

   receiving by a base station an average signal to noise ratio over respective antennas of a user equipment fed back from the user equipment; determining an uplink channel response matrix of the user equipment from an echo signal over an uplink channel; transposing determined uplink channel response matrix into a downlink channel response matrix;

performing sigular value decomposition on the downlink channel response matrix to derive eigenvalues and beam space vectors in respective beam spaces of the user equipment;

determining active signal to noise ratios in the respective beam spaces of the user equipment from the average signal to noise ratio and the eigenvalues;

searching, with the active signal to noise ratios, a mapping relationship table between active signal to noise ratios and modulation and coding schemes for modulation and coding schemes available in the respective beam spaces; and

performing a forming process on signals to be transmitted in the respective beam spaces, the number of which corresponds to the number of beam spaces supportable by the user equipment, according to the modulation and coding schemes available and the beam space vectors in the respective beam spaces.

24. The method of claim 23, wherein the active signal to noise ratios in the respective beam spaces of the user equipment are calculated as the product of the average signal to noise ratio and the square of the eigenvalues in the respective beam spaces.

25. The method of claim 23, wherein the active signal to noise ratios in the respective beam spaces of the user equipment are determined in the following formula:

$$SINR_i = SINR \cdot \hat{\lambda}_i^2 \cdot \frac{p_i \cdot \hat{N}}{P},$$

wherein $SINR_i$ is the active signal to noise ratios in the respective beam spaces of the user equipment, $SINR$ is the average signal to noise ratio over the respective antennas of the user equipment, $\lambda_i$ is the eigenvalues in the respective beam spaces, $p_i$ is power allocated to the respective beam spaces, $P$ is the sum of power allocated to the respective beam spaces, and $\hat{N}$ is the number of beam spaces supportable by the user equipment.

26. A base station for forming a signal in a beam space, comprising:

a reception unit configured to receive an average signal to noise ratio over respective antennas of a user equipment fed back from the user equipment;

a determination unit configured to determine an uplink channel response matrix of the user equipment from an echo signal over an uplink channel;

a transposition unit configured to transpose the uplink channel response matrix determined by the determination unit into a downlink channel response matrix;

a decomposition unit configured to perform sigular value decomposition on the downlink channel response matrix generated by the transposition unit to derive eigenvalues and beam space vectors in the respective beam spaces of the user equipment;

a number determination unit configured to determine the number of beam spaces supportable by the user equipment from the eigenvalues in the respective beam spaces derived by the decomposition unit;

an active signal to noise ratio determination unit configured to determine active signal to noise ratios in the respective beam spaces of the user equipment from the eigenvalues and the average signal to noise ratio;

a search unit configured to search, with the active signal to noise ratios determined by the active signal to noise ratio determination unit, a mapping relationship table between active signal to noise ratios and modulation and coding schemes for modulation and coding schemes available in the respective beam spaces; and

a forming unit configured to perform a forming process on signals to be transmitted in the respective beam spaces, the number of which corresponds to the number of beam spaces determined by the number determination unit, according to the modulation and coding schemes available in the respective beam spaces retrieved by the search unit and the beam space vectors derived by the decomposition unit.

27. A method for forming a signal in a beam space, comprising:

receiving by a base station modulation and coding schemes available in respective beam spaces of a user equipment and the number of beam spaces supportable by the user equipment fed back from the user equipment;

determining an uplink channel response matrix of the user equipment from an echo signal over an uplink channel;

transposing determined uplink channel response matrix into a downlink channel response matrix;

performing sigular value decomposition on the downlink channel response matrix to derive beam space vectors in the respective beam spaces of the user equipment; and

performing a forming process on signals to be transmitted in the respective beam spaces, the number of which corresponds to the number of beam spaces supportable by the user equipment, according to the modulation and coding schemes available and the beam space vectors in the respective beam spaces.

**28.** A base station for forming a signal in a beam space, comprising:

a reception unit configured to receive modulation and coding schemes available in respective beam spaces of a user equipment and the number of beam spaces supportable by the user equipment fed back from the user equipment;

a determination module configured to determine an uplink channel response matrix of the user equipment from an echo signal over an uplink channel;

a transposition module configured to transpose the uplink channel response matrix determined by the determination module into a downlink channel response matrix;

a decomposition module configured to perform sigular value decomposition on the downlink channel response matrix generated by the transposition module to derive beam space vectors in the respective beam spaces of the user equipment; and

a forming module configured to perform a forming process on signals to be transmitted in the respective beam spaces, the number of which corresponds to the number of beam spaces supportable by the user equipment received by the reception unit, according to the modulation and coding schemes available in the respective beam spaces received by the reception unit and the beam space vectors in the respective beam spaces derived by the decomposition module.

A user equipment receives common pilot signals transmitted respectively from at least two antennas in a base station — 11

The user equipment determines a relevant parameter in a beam space of the user equipment from the received common pilot signals transmitted respectively from the at least two antennas — 12

Fig.1

21

22

Reception unit → Determination unit

Fig.2

A base station receives an average signal to noise ratio over respective antennas of a user equipment fed back from the user equipment — 31

The base station determines an uplink channel response matrix of the user equipment from an echo signal over an uplink channel — 32

Transpose the uplink channel response matrix into a downlink channel response matrix — 33

Perform sigular value decomposition on the downlink channel response matrix to derive eigenvalues and beam space vectors in respective beam spaces of the user equipment — 34

Calculate active signal to noise ratios in the respective beam spaces of the user equipment as the product of the average signal to noise ratio and the square of the eigenvalues in the respective beam spaces — 35

Search, with the active signal to noise ratios, a mapping relationship table between signal to noise ratios and modulation and coding schemes for modulation and coding schemes available in the respective beam spaces — 36

Determine the number of beam spaces supportable by the user equipment from the eigenvalues in the respective beam spaces or from the active signal to noise ratios in the respective beam spaces of the user equipment — 37

Perform a forming process on signals to be transmitted in the respective beam spaces, the number of which corresponds to the number of beam spaces supportable by the user equipment, according to the modulation and coding schemes available and the beam space vectors in the respective beam spaces — 38

Fig.3

A base station receives modulation and coding schemes available in respective beam spaces fed back from a user equipment ⟩∼ 41

The base station determines an uplink channel response matrix of the user equipment from an echo signal over an uplink channel ⟩∼ 42

The determined uplink channel response matrix into a downlink channel response matrix ⟩∼ 43

Perform sigular value decomposition on the downlink channel response matrix to derive eigenvalues and beam space vectors in the respective beam spaces of the user equipment ⟩∼ 44

Determine the number of beam spaces supportable by the user equipment from the eigenvalues in the respective beam spaces ⟩∼ 45

Perform a forming process on signals to be transmitted in the respective beam spaces, the number of which corresponds to the number of beam spaces supportable by the user equipment, according to the modulation and coding schemes available and the beam space vectors in the respective beam spaces ⟩∼ 46

Fig.4

A base station receives modulation and coding schemes available in respective beam spaces and the number of beam spaces supportable by a user equipment fed back from the user equipment — 51

The base station determines an uplink channel response matrix of the user equipment from an echo signal over an uplink channel — 52

Transpose the uplink channel response matrix into a downlink channel response matrix — 53

Perform sigular value decomposition on the downlink channel response matrix to derive beam space vectors in the respective beam spaces of the user equipment — 54

Perform a forming process on signals to be transmitted in the respective beam spaces, the number of which corresponds to the number of beam spaces supportable by the user equipment, according to the modulation and coding schemes available and the beam space vectors in the respective beam spaces — 55

Fig.5

A base station receives an average signal to noise ratio over respective antennas of a user equipment fed back from the user equipment ∼ 61

↓

The base station determines an uplink channel response matrix of the user equipment from an echo signal over an uplink channel ∼ 62

↓

Transpose the uplink channel response matrix into a downlink channel response matrix ∼ 63

↓

Perform sigular value decomposition on the downlink channel response matrix to derive eigenvalues and beam space vectors in respective beam spaces of the user equipment ∼ 64

↓

Determine the number of beam spaces supportable by the user equipment from the eigenvalues in the respective beam spaces ∼ 65

↓

Determine active signal to noise ratios in the respective beam spaces of the user equipment from the average signal to noise ratio ∼ 66

↓

Search, with the active signal to noise ratios, a mapping relationship table between active signal to noise ratios and modulation and coding schemes for modulation and coding schemes available in the respective beam spaces ∼ 67

↓

Perform a forming process on signals to be transmitted in the respective beam spaces, the number of which corresponds to the number of beam spaces supportable by the user equipment, according to the modulation and coding schemes available and the beam space vectors in the respective beam spaces ∼ 68

Fig.6

Fig.7

Fig.8

91

Reception unit

92

Determination unit

93

Transposition unit

94

Decomposition unit

95

Forming unit

Fig.9

10 1

Reception unit

10 2

Determination unit

10 3

Transposition unit

10 4

Decomposition unit

10 8

Forming unit

10 7

Search unit

10 6

Active signal to noise determination unit

10 5

Number determination unit

Fig.10

<table>
<tr><td colspan="2"><strong>INTERNATIONAL SEARCH REPORT</strong></td><td>International application No.<br>PCT/CN2009/001319</td></tr>
</table>

**A. CLASSIFICATION OF SUBJECT MATTER**

H04B 7/005（2006.01）i

According to International Patent Classification (IPC) or to both national classification and IPC

**B. FIELDS SEARCHED**

Minimum documentation searched (classification system followed by classification symbols)

IPC:H04B,H01Q,H04J,H04Q,H04L,G10L,H04R,G01S,H04W

Documentation searched other than minimum documentation to the extent that such documents are included in the fields searched

Electronic data base consulted during the international search (name of data base and, where practicable, search terms used)

CNPAT,CNKI,WPI,EPODOC: beam w space, associated w parameter?, common w pilot, at w least, multi+, two, antenna?,form+,shap+, SIR, response w matrix, transpose+, eigenvalue, singular w value w decomposition,vector?, modulat+, cod+

**C. DOCUMENTS CONSIDERED TO BE RELEVANT**

| Category* | Citation of document, with indication, where appropriate, of the relevant passages | Relevant to claim No. |
|---|---|---|
| A | CN1658526A （DA TANG MOBILE COMMUNICATIONS EQUIPMENT CO.,LTD.）24 Aug. 2005 (24.08.2005) the whole document | 1-28 |
| A | CN1266856C （HUAWEI TECHNOLOGIES CO., LTD.）26 Jul. 2006 (26.07.2006) the whole document | 1-28 |
| A | CN1739270A （QUALCOMM INCORPORATED）22 Feb. 2006 (22.02.2006)the whole document | 1-28 |
| A | EP1439526A2 （SAMSUNG ELECTRONICS CO.,LTD.）21 Jul. 2004 (21.07.2004) the whole document | 1-28 |
| A | US2003/0128160A1 （SIM, Dong- Hi）10 Jul.2003 (10.07.2003)the whole document | 1-28 |

☐ Further documents are listed in the continuation of Box C.　　☒ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim (S) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&"document member of the same patent family |
| Date of the actual completion of the international search<br>04 Feb. 2010（04.02.2010） | Date of mailing of the international search report<br>**04 Mar. 2010 (04.03.2010)** |
| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br>YANG Jibin<br>Telephone No. (86-10)62413491 |

Form PCT/ISA /210 (second sheet) (July 2009)

**INTERNATIONAL SEARCH REPORT**
Information on patent family members

| International application No. |
| --- |
| PCT/CN2009/001319 |

| Patent Documents referred in the Report | Publication Date | Patent Family | Publication Date |
| --- | --- | --- | --- |
| CN1658526A | 24.08.2005 | None | |
| CN1266856C | 26.07.2006 | WO2004013988 A1 | 12.02.2004 |
| | | AU2003255091 A1 | 23.02.2004 |
| | | CN1474608A | 11.02.2004 |
| | | CN1476270A | 18.02.2004 |
| CN1739270A | 22.02.2006 | WO2004054191 A1 | 24.06.2004 |
| | | US2004165684 A1 | 26.08.2004 |
| | | AU2003297873 A1 | 30.06.2004 |
| | | EP1570616 A1 | 07.09.2005 |
| | | BR0317173 A | 25.10.2005 |
| | | MXPA05006231 A | 01.09.2005 |
| | | JP2006513674T | 20.04.2006 |
| | | KR20050085568 A | 29.08.2005 |
| | | INCHENP200501211E | 10.08.2007 |
| | | US2007297526 A1 | 27.12.2007 |
| | | EP1940098 A1 | 02.07.2008 |
| | | DE60322424E | 04.09.2008 |
| | | RU2337493 C2 | 27.10.2008 |
| | | ES2308027T3 | 01.12.2008 |
| EP1439526A2 | 21.07.2004 | JP2004229289 A | 12.08.2004 |
| | | US2004161121A1 | 19.08.2004 |
| | | KR20040066257A | 27.07.2004 |
| US2003/0128160A1 | 10.07.2003 | KR20030050338A | 25.06.2003 |

Form PCT/ISA /210 (patent family annex) (July 2009)